(19) Europäisches Patentamt
European Patent Office
Office européen des brevets

(11) **EP 3 434 884 B1**

(12) **EUROPEAN PATENT SPECIFICATION**

(45) Date of publication and mention
of the grant of the patent:
**27.05.2020 Bulletin 2020/22**

(51) Int Cl.:
*F02C 9/34* $^{(2006.01)}$    *G01K 1/02* $^{(2006.01)}$

(21) Application number: **18182387.3**

(22) Date of filing: **09.07.2018**

(54) **DETERMINATION OF A FUEL DELIVERY FAULT IN A GAS TURBINE ENGINE**

BESTIMMUNG EINES TREIBSTOFFLIEFERUNGSFEHLERS IN EINEM GASTURBINENTRIEBWERK

DÉTERMINATION D'UN DÉFAUT DE LIVRAISON DE CARBURANT DANS UN MOTEUR À TURBINE À GAZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2017 GB 201712141**

(43) Date of publication of application:
**30.01.2019 Bulletin 2019/05**

(73) Proprietor: **Rolls-Royce plc**
**London N1 9FX (GB)**

(72) Inventors:
• **Muldal, Carl**
**Derby, Derbyshire DE24 8BJ (GB)**
• **King, Stephen**
**Derby, Derbyshire DE24 8BJ (GB)**
• **Rimell, Andrew**
**Derby, Derbyshire DE24 8BJ (GB)**

(74) Representative: **Rolls-Royce plc**
**Intellectual Property Dept SinA-48**
**PO Box 31**
**Derby DE24 8BJ (GB)**

(56) References cited:
**JP-B2- 4 064 735    US-A1- 2004 079 070**
**US-B2- 8 200 410**

## Description

Field of the Present Disclosure

The present disclosure relates to determination of a fuel delivery fault in a gas turbine engine.

Background

Multi-stage combustors are used particularly in lean burn fuel systems of gas turbine engines to reduce unwanted emissions while maintaining thermal efficiency and flame stability. For example, duplex fuel injectors have pilot and mains fuel manifolds feeding pilot and mains discharge orifices of the injectors. At low power conditions only the pilot stage is activated, while at higher power conditions both pilot and mains stages are activated. The fuel for the manifolds typically derives from a pumped and metered supply. A splitter unit can then be provided to selectively split the metered supply between the manifolds as required for a given staging condition.

A typical annular combustor has a circumferential arrangement of fuel injectors, each associated with respective pilot and mains feeds extending from the circumferentially extending pilot and mains manifolds. Each injector generally has a nozzle forming the discharge orifices which discharge fuel into the combustion chamber of the combustor, a feed arm for the transport of fuel to the nozzle, and a head at the outside of the combustor at which the pilot and mains feeds enter the feed arm. Within the injectors, a control valve, often of a type known as a flow scheduling valve (FSV), is typically associated with each feed in order to retain a primed manifold when de-staged and at shut-down. The FSVs also prevent fuel flow into the injector nozzle when the supply pressure is less than the cracking pressure (i.e. less than a given difference between manifold pressure and combustor gas pressure).

Multi-stage combustors may have further stages and/or manifolds. For example, the pilot manifold may be split into two manifolds for lean blow-out prevention during rapid engine decelerations.

During pilot-only operation, the splitter unit directs fuel for burner flow only through the pilot fuel circuit (i.e. pilot manifold and feeds). It is therefore conventional to control temperatures in the de-staged (i.e. mains) fuel circuit to prevent coking due to heat pick up from the hot engine casing. One known approach, for example described in EP A 2469057, is to provide a separate recirculation manifold which is used to keep the fuel in the mains manifold cool when it is deselected. It does this by keeping the fuel in the mains manifold moving, although a cooling flow also has to be maintained in the recirculation manifold during mains operation to avoid coking.

However, a problem associated with this approach is how to accommodate a mains control valve malfunction. For example, carbon deposition caused by hot fuel being stagnant or flowing at a low velocity around an FSV can cause increased stiction in the FSV, leading to it either under or over-scheduling the fuel supply to the combustor. In pilot-only operation, when cooling flow is passing through the mains manifold, an FSV failing to an open condition can cause hot streaks which may lead to nozzle and turbine damage. In pilot and mains operation, such a failure can produce a drop in mains manifold pressure which causes other mains control valves to close. A possible outcome is again hot streaks leading to nozzle and turbine damage.

US 2016/0245524 proposes a combustion staging system having one or more fuel pressure sensors which detect the pressure of the cooling flow on the recirculation line, and a control arrangement which is adapted to close off the recirculation line when the pressure sensors indicates a failure of the cooling flow. However, this proposal is only applicable to combustion staging system architectures which include a recirculation line, and there are ongoing efforts to remove the recirculation line from staging system at least for cost/weight reasons.

Moreover, the proposal of US 2016/0245524 determines if there is a fuel system fault, rather than a fault with a specific FSV or fuel injector (e.g. a fuel passage blockage or valve stiction failure). Also, the proposal focuses on monitoring whether the recirculation line is leaking fuel into the mains manifold causing over-fuelling, which is only one possible failure mode, albeit an important one in the context of lean burn fuel system architectures. For example, the proposal cannot identify a fault associated with a pilot manifold.

Another known approach to fault detection is to monitor for hot streaks using a turbine gas temperature monitoring system. In such a system, the temperature profile of the hot gases from the combustor used to drive the turbine is measured by an array of sensors, such as thermocouples. These can be arranged in one or more parallel groups to form one or sensor ladders, as proposed in US 2009/046762 and US 9297707. S. King et al., Anomaly Detection of Combustor Systems in Support of Unmanned Air Vehicle Applications, pages 694-705, 6th International Conference on Condition Monitoring and Machinery Failure Prevention Technologies 2009, vol. 2 proposes a neural network-based analysis of turbine gas temperature profiles for the detection of combustion abnormalities. However, it can be difficult to causally link such abnormalities with specific fuel system faults rather than more general problems with the combustor.

United States Patent publication US2004079070 discloses a system and a method for detecting gas turbine engine hot section condition using temperature measurements during engine operation. The system comprises a sensing unit for sensing a temperature distribution across a hot combustion gas stream generated by a gas turbine engine combustor. A signal processor receives temperature signals from the sensing unit and generates a combustor malfunction signal when the difference between a maximal temperature and a minimal temperature of the sensed temperature distribution is greater than a predetermined acceptable delta value.

Summary

There is thus a need for an improved approach for determining gas turbine engine fuel delivery faults.

Accordingly, in a first aspect, the present disclosure provides a method of determining a fuel delivery fault in a gas turbine engine having a combustor, a combustor fuel system for delivering fuel to the combustor, and a turbine which is driven by hot gas from the combustor, the method including:

comparing a measured turbine gas temperature profile against a predicted turbine gas temperature profile;

comparing a measured fuel delivery flow number of the combustor fuel system, defined by the mass flow rate of fuel for a given pressure drop from the fuel supply to the combustor, against a predicted fuel delivery flow number of the combustor fuel system; and indicating that a fuel delivery fault in the combustor fuel system has been detected when both the measured turbine gas temperature profile and the measured fuel delivery flow number differ from their predicted values by more than respective predetermined thresholds, wherein the measured fuel delivery flow number is based on measurements of: fuel mass flow rate at a given measurement location in the fuel system, fuel pressure at the given measurement location, and combustor inlet pressure, and wherein the predicted turbine gas temperature profile and the predicted fuel delivery flow number are obtained from an engine model or models.

Advantageously, the method combines monitoring of both turbine gas temperature profile and fuel system flow number such that an anomaly in turbine gas temperature profile can be correlated to a change in fuel system flow number and hence the cause of a fault can be determined.

The method is typically computer-implemented. Accordingly, further aspects of the present disclosure provide: a computer program comprising code which, when the code is executed on a computer, causes the computer to perform the method of the first aspect; a computer readable medium storing a computer program comprising code which, when the code is executed on a computer, causes the computer to perform the method of the first aspect; and a data processing arrangement comprising one or more processors adapted to perform the method of the first aspect. For example, a data processing arrangement can be provided for determining a fuel delivery fault in a gas turbine engine having a combustor, a combustor fuel system for delivering fuel to the combustor, and a turbine which is driven by hot gas from the combustor, the system including: one or more processors configured to: compare a measured turbine gas temperature profile against a predicted turbine gas temperature profile; compare a measured fuel delivery flow number of the combustor fuel system against a predicted fuel delivery flow number of the combustor fuel system; and indicate that a fuel delivery fault in the combustor fuel system has been detected when both the measured turbine gas temperature profile and the measured fuel delivery flow number differ from their predicted values by more than respective predetermined thresholds. The data processing arrangement thus corresponds to the method of the first aspect. The data processing arrangement may further include: a computer-readable medium operatively connected to the processors, the medium storing the measured and predicted turbine gas temperature profiles and the measured and predicted fuel delivery flow numbers. The data processing arrangement may be part of an engine electronic controller and/or may include the whole or part of a dedicated engine health monitoring control unit.

In a further aspect, the present disclosure provides a health monitoring system comprising:

the data processing arrangement of the previous aspect;

an array of temperature sensors for obtaining the measured turbine gas temperature profile; and one or more combustor fuel system fuel pressure sensors for use in obtaining the measured fuel delivery flow number.

In a further aspect, the present disclosure provides a gas turbine engine having the health monitoring system of the previous aspect.

Optional features of the present disclosure will now be set out. These are applicable singly or in any combination with any aspect of the present disclosure.

The indication that a fuel delivery fault has been detected may include identifying the probable location of the fuel delivery fault.

The combustor fuel system may have a manifold which delivers a fuel flow to fuel injectors of the combustor, and the comparison of flow numbers may include comparing a measured against a predicted fuel delivery flow number for fuel flow in the manifold. An identified probable location of the fuel delivery fault may then be the manifold itself, or a fuel injector which receives fuel from the manifold.

When the combustor fuel system has plural manifolds which deliver respective fuel flows to fuel injectors of the combustor, the comparison of flow numbers may include comparing a measured against a predicted fuel delivery flow number for fuel flow in each of the manifolds. In this way, a given fuel delivery fault can be associated with one or other of the manifolds. In particular, the combustor may be a multi-stage combustor having plural fuel injectors, and the combustor fuel system may have pilot and mains fuel manifolds which respectively deliver pilot and mains fuel flows to the injectors for performance of pilot-only and pilot-and-mains staging control of the combustor.

The combustor fuel system may further have respective fuel passages from a manifold to the fuel injectors, and the comparison of flow numbers may include comparing a measured against a predicted fuel delivery flow number for fuel flow in each fuel passage. For example, in a combustor fuel system having pilot and mains fuel manifolds, the fuel passages from the mains manifold to the fuel injectors may have respective fuel control valves. Additionally or alternatively, the fuel passages from the pilot manifold to the fuel injectors may have respective fuel control valves. In such cases, the indicated fuel delivery fault can include an indication of a faulty fuel control valve, and preferably a location of the faulty fuel control valve.

The measured fuel delivery flow number is based on measurements of: fuel mass flow rate at a given measurement location in the fuel system, fuel pressure at the given measurement location, and combustor inlet pressure.

The measured turbine gas temperature profile may be obtained from an array of temperature sensors (e.g. thermocouples) in the turbine. Typically the array is a circumferential array. Typically, the combustor fuel system delivers fuel to plural fuel injectors of the combustor, and in this case there is preferably at least one temperature sensor for every two of the fuel injectors.

The predicted turbine gas temperature profile and the predicted fuel delivery flow number is obtained from an engine model or models. For example, the predictions of the engine model may be based on measurements of engine performance parameters which include at least: the combustor inlet pressure, the combustor inlet temperature, the total fuel mass flow rate delivered to the combustor, a shaft speed of the engine, and optionally fuel split if the combustor is a multi-stage combustor.

The method may further include: measuring the turbine gas temperature profile and the fuel delivery flow number; and predicting the turbine gas temperature profile and the fuel delivery flow number.

Brief Description of the Drawings

Embodiments of the present disclosure will now be described by way of example with reference to the accompanying drawings in which:

Figure 1 shows a longitudinal cross-section through a ducted fan gas turbine engine;

Figure 2 shows schematically a staging system of a lean burn fuel supply system of the engine of Figure 1;

Figure 3 is a flow chart showing the work flow of a health monitoring scheme; and

Figure 4 shows schematically a variant staging system of a lean burn fuel supply system.

Detailed Description and Further Optional Features

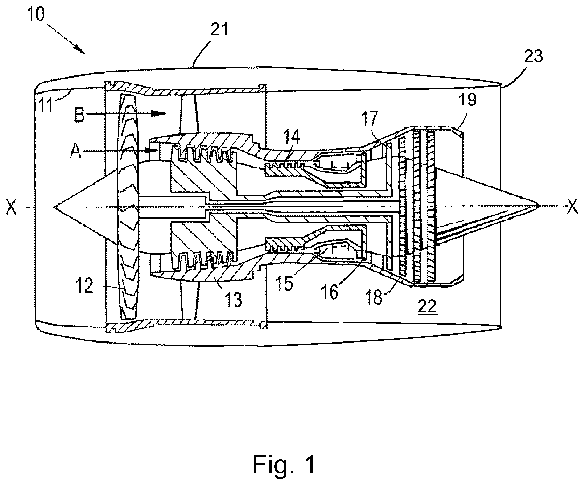

With reference to Figure 1, a ducted fan gas turbine engine is generally indicated at 10 and has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During operation, air entering the intake 11 is accelerated by the fan 12 to produce two air flows: a first airflow A into the intermediate-pressure compressor 13 and a second air flow B which passes through the bypass duct 22 to provide propulsive thrust. The intermediate-pressure compressor 13 compresses the airflow A directed into it before delivering that air to the high-pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate-pressure compressors 14, 13 and the fan 12 by suitable interconnecting shafts.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

The engine has a pumping unit comprising a low pressure (LP) pumping stage which draws fuel from a fuel tank of the aircraft and supplies the fuel at boosted pressure to the inlet of a high pressure (HP) pumping stage. The LP stage typically comprises a centrifugal impeller pump while the HP pumping stage may comprise one or more positive displacement pumps, e.g. in the form of twin pinion gear pumps. The LP and HP stages are typically connected to a common drive input, which is driven by the engine HP or IP shaft via an engine accessory gearbox.

A lean burn fuel supply system then accepts fuel from the HP pumping stage for feeds to the combustor 15 of the engine 10. This system typically has a hydromechanical unit (HMU) comprising a fuel metering valve operable to control the rate at which fuel is allowed to flow to the combustor. The HMU further typically comprises: a pressure drop control arrangement (such as a spill valve and a pressure drop control valve) which is operable to maintain a substantially constant pressure drop across the metering valve, and a pressure raising and shut-off valve at the fuel exit of the HMU which ensures that a predetermined minimum pressure level is maintained upstream thereof for correct operation of any fuel pressure operated auxiliary devices (such as variable inlet guide vane or variable stator vane actuators) that receive fuel under pressure from the HMU. Further details of such an HMU are described in EP 2339147 A.

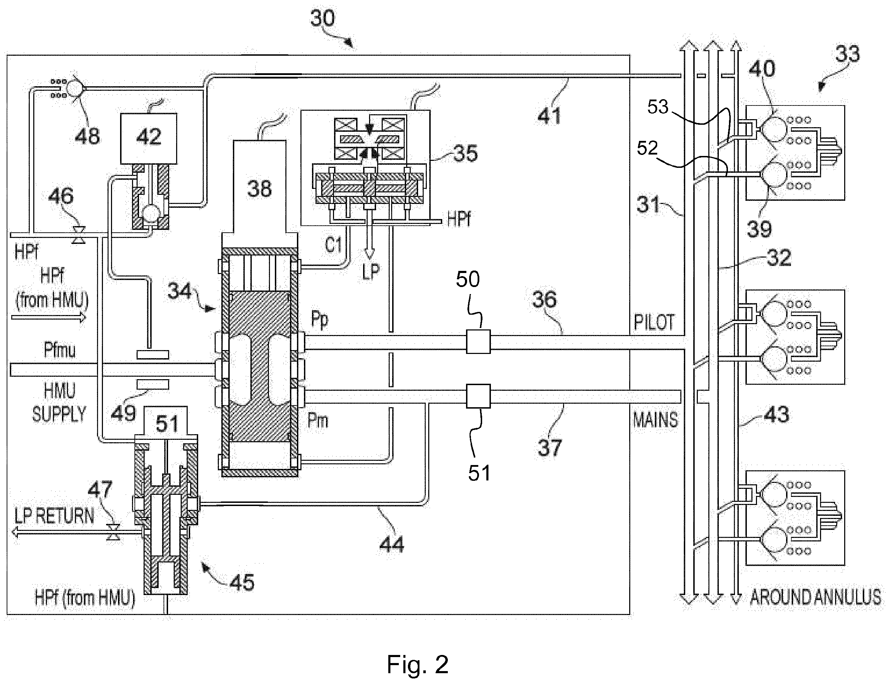

An engine electronic controller (EEC - not shown) commands the HMU fuel metering valve to supply fuel to the combustor at a given flow rate. The metered fuel flow leaves the HMU and arrives at a staging system 30, shown schematically in Figure 2, at a pressure $P_{fmu}$.

The staging system 30 splits the fuel under the control of the EEC into two flows: one at a pressure $P_p$ for a pilot manifold 31 and the other at a pressure $P_m$ for a mains manifold 32. The pilot manifold feeds pilot nozzles of a number of fuel injectors 33 of the combustor. The mains manifold feeds secondary nozzles of the fuel injectors. Pilot fuel flow scheduling valves (FSVs) 39 and mains FSVs 40 at the injectors prevent combustion chamber gases entering the respective manifolds. By varying the fuel split between the manifolds, the EEC can thus perform staging control of the engine.

In more detail, the staging system 30 has a fuel flow splitting valve (FFSV) 34, which receives the metered fuel flow from the HMU at pressure $P_{fmu}$. A spool is slidable within the FFSV under the control of a servo valve 35, the position of the spool determining the outgoing flow split between a pilot connection pipe 36 which delivers fuel to the pilot manifold 31 and a mains connection pipe 37 which delivers fuel to the mains manifold 32. The spool can be positioned so that the mains stage is deselected, with the entire metered flow going to the pilot stage. An LVDT 38 provides feedback on the position of the spool to the EEC, which in turn controls staging by control of the servo valve.

The staging system 30 also has a recirculation line to provide the mains manifold 32 with a cooling flow of fuel when mains manifold is deselected. The recirculation line has a delivery section including a delivery pipe 41 which receives the cooling flow from a fuel recirculating control valve (FRCV) 42, and a recirculation manifold 43 into which the delivery pipe feeds the cooling flow. The recirculation manifold has feeds which introduce the cooling flow from the recirculation manifold to the mains manifold via connections to the feeds from the mains manifold to the mains FSVs 40.

The recirculation line also has a return section which collects the returning cooling flow from the mains manifold 32. The return section is formed by a portion of the mains connection pipe 37 and a branch pipe 44 from the mains connection pipe, the branch pipe extending to a recirculating flow return valve (RFRV) 45 from whence the cooling flow exits the recirculation line.

The cooling flow for the recirculation line is obtained from the HMU at a pressure $HP_f$ via a cooling flow orifice 46. On leaving the RFRV 45 via a pressure raising orifice 47, the cooling flow is returned at a pressure $P_{lp}$ to the pumping unit for re-pressurisation by the HP pumping stage. A check valve 48 limits the maximum pressure in the recirculation line. The HMU also supplies fuel at pressure $HP_f$ for operation of the servo valve 35 and the RFRV 45. The FRCV 42 and the RFRV 45 are operated under the control of the EEC.

When mains is staged in, a cooling flow is also directed through the recirculation manifold 43 to avoid coking therein. More particularly a small bypass flow is extracted from the HMU's metered fuel flow at pressure $P_{fmu}$. The bypass flow is sent via a flow washed filter 49 to a separate inlet of the FRCV 42, and thence through the delivery pipe 41 to the recirculation manifold 43. The bypass flow exits the recirculation manifold to rejoin the mains fuel flow at the injectors 33.

The engine 10 has a fuel supply system health monitoring (HM) scheme that uses a combination of fuel system pressures, engine operating parameters, and turbine gas temperature (TGT) profiles to provide deterministic detection of fuel control system faults, such as blockage or stiction of a pilot FSV 39 or a mains FSV 40. The HM scheme is implemented as a data processing arrangement that may include a sub-unit of the EEC, and/or may include the whole or part of a dedicated HM control unit.

Specifically, the HM scheme monitors the pressure in the pilot manifold 31 and the mains manifold 33 via respective pilot 50 and mains 51 pressure sensors on those manifolds or the pilot 36 and mains 37 connection pipes to the manifolds (but downstream of any low-pressure returns or fuel system hardware on the connection pipes).

The fuel delivery through the pilot 31 or the mains 33 manifold has a characteristic flow number, defined by the mass flow rate of fuel for a given pressure drop from the fuel supply to the combustor.

$$Flow\ Number = \frac{\dot{m}}{\sqrt{\Delta P}}$$

where $\Delta P = P_{fuel} - P_{30}$; $\dot{m}$ = fuel mass flow rate, $P_{fuel}$ is the respective fuel pressure as measured by the pilot 50 or mains 51 pressure sensor, and $P_{30}$ is the measured combustor inlet pressure.

The flow number changes with operating point due to the action of the respective FSVs 39, 40. In a rich burn combustion system the fuel injectors would have weight distributors installed at the inlet to each injector which would similarly change flow number (i.e. reduce it at low flow conditions) to provide a uniform circumferential fuel distribution into the combustor

Despite the above-mentioned cooling flows, the hot fuel within the fuel supply system and the injectors 33 presents a risk of coking. This thermal decomposition of the fuel into insoluble carbon based particulate can lead to blockages in fuel passages, either through deposition on the fuel injector fuel passages, or through spalling of deposition generated in the fuel manifolds 31, 32. In addition, there is a potential risk to the FSVs 39, 40 developing stiction through reduced clearances in moving parts. The stiction can cause an FSV to schedule fuel incorrectly, either by failing to close as fuel pressure reduces, or by failing to open as fuel pressure increases. However, in addition, an FSV may fail to open or close correctly due to mechanical failure. Depending on the failure state, a failed FSV passes higher or lower rates of fuel flow relative to the other FSVs, and therefore can lead to a non-uniform circumferential distribution of fuel entering the combustor. Coking of the fuel system also typically results in a non-uniform circumferential distribution of fuel flow/pressure around the fuel system.

Any change in FSV stiction, or to the size of the smaller diameter fuel passages which meter fuel flow through the injectors, results in a change in the pressure required to pass a given mass flow of fuel, and hence leads to a change in flow number. The pilot 50 and mains 51 pressure sensors allow this change to be monitored on an overall manifold flow number basis. However, if further pressure sensors are additionally or alternatively installed at the respective pilot 52 and mains 53 fuel passages of each injector, the change can be monitored on an individual FSV basis, allowing not just the occurrence, but the location and/or the severity of an FSV fault to be detected. For example, if a single fuel injector has a mains FSV stuck partially open the resultant hot spot will be more severe than multiple injectors with mains FSVs leaking slightly, although the overall change in manifold flow number would be the same.

A non-uniform fuel distribution into the combustor results in a non-uniform temperature distribution at the turbine inlet. This can present numerous issues, such as turbine forcing. However, the most serious risk it poses is through a local increase in the temperature of the gases passing through the cooled turbine stages and reaching the uncooled turbine stages. These uncooled stages are generally more susceptible to sustaining damage caused by a hot streak from the combustor than the cooled stages. Moreover, damage to the uncooled stages can be particularly harmful since these parts of the engine, in many engine architectures, carry services such as oil, which if exposed to turbine gases could lead to a hazardous event. However, a severely non-uniform temperature distribution, e.g. caused by a complete FSV failure, can result in damage to both cooled and uncooled stages of the turbine.

Although the pressure sensors 50, 51 can be used to measure a change in fuel delivery flow number through the respective manifold 31, 32, of itself such a change may not be enough to adequately determine the occurrence of a fuel delivery fault.

Accordingly, as mentioned above, the HM scheme combines the measurement of fuel delivery flow number with measurement of turbine temperature profiles to provide deterministic detection. In particular, the engine 10 also has temperature instrumentation capable of detecting a non-uniform fuel distribution through anomalies in the TGT profile.

The TGT profile can be measured, for example, by arrangements of thermocouples, as discussed for example in US 2009/046762 or US 9297707. The thermocouples can be located, for example, within the internal cavities of nozzle guide vanes at the entrance of the low-pressure turbine 18. However, any suitable location in the turbine can be used and, generally, the further upstream towards the combustor the better for relating the temperatures measured by the thermocouples to combustor temperatures.

Preferably at least one temperature measurement location is provided for every two fuel injectors 33. However, additional measurement locations can be provided to improve diagnostic accuracy.

The HM unit predicts an expected TGT profile across the turbine gas path and expected fuel delivery flow numbers through the pilot and mains fuel manifolds 31, 32. The predictions can be performed, for example, by a suitable engine thermodynamic model which bases its predictions on e.g. the following measured or synthetic engine performance parameters:

- $T_{30}$, Combustor Inlet Temperature
- $P_{30}$, Combustor Inlet Pressure
- WFE, Total Engine Fuel Flow
- Fuel split (required for a lean burn system application)
- NH, High-pressure shaft speed

The HM unit uses the predicted TGT profile and manifold fuel delivery flow numbers in combination with the corresponding measured values to detect if deviation from the predicted TGT correlates with variations in manifold flow number for a given condition. If a manifold flow number varies with a temperature traverse then the root cause of the variation can be defined. Such information can then be used to determine an appropriate type of servicing to rectify the issue. In particular, core engine mounted architectures such as fuel manifolds and injectors require a large number of externals to be removed before they can be accessed. Therefore, if the root cause of an anomaly can be identified at the outset of maintenance the amount of disruption for the engine operator can be reduced. Also if a fault is detected before it becomes a significant operational or safety issue, maintenance can be scheduled sufficiently in advance to reduce impact on the operator.

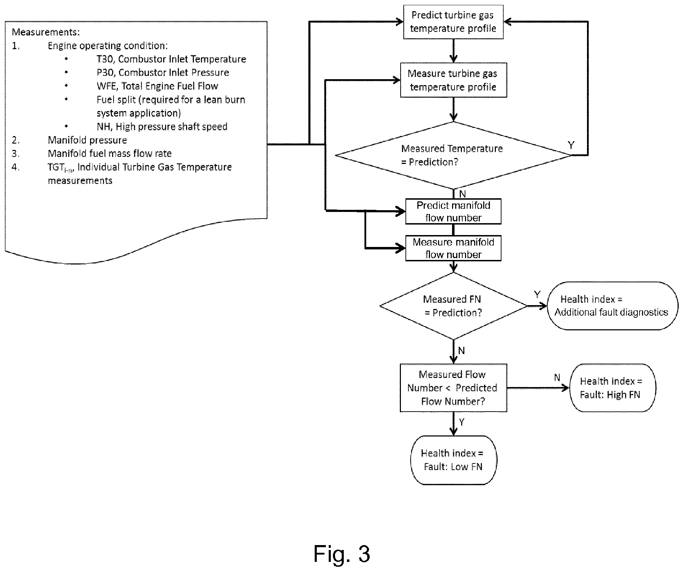

Figure 3 is a flow chart showing the work flow of the HM scheme. In summary:

- A prediction of temperature distribution across the turbine gas path is generated by applying measured or synthetic engine operating parameters to an engine model.
- TGT profile is measured using suitably positioned thermocouples.
- If the measured TGT differs from the predicted TGT by more than a threshold, then a fault is enunciated, a prediction of flow number for each manifold 31, 32 is generated by applying the measured engine operating parameters to the engine model, and a corresponding flow number is measured for each manifold using measurements of total fuel flow from the HMU, the fuel split, and fuel pressure from a transducer located in the manifold upstream of the injectors 33.
- If the measured flow numbers are effectively equal to the corresponding predicted flow number, then the fault is not diagnosed. Such an undiagnosed fault can be flagged for human review or sent for further automated model fitting.
- However, if a measured flow number differs from the corresponding predicted flow number by more than a threshold, then a high flow number or a low flow number fault is identified. Maintenance action can then be scheduled to rectify the issue or advice is given to the engine operator to extend the operational window before maintenance action is required.

One example of a diagnosed fault is a measured TGT indicative of a hot streak, and a measured flow number which is higher than predicted. This can be produced by a failed open FSV sticking open and passing too much fuel and thereby producing the hot streak. Another example is a measured TGT indicative of a hot streak, and a measured flow number which is lower than predicted. This can be produced by a plurality of blocked FSVs, such that overall fuel flow is reduced but skewed towards the properly functioning FSVs.

The comparison between the predicted and measured TGT profiles and detection of a mal-distribution therein can be based on a trained model of the engine (either fleet or engine specific). An advantage of such an approach is that any change in shaft speed, $P_{30}$, $T_{30}$, WFE or fuel split can be accounted for in the model before the flow number comparison.

More generally, although described above in terms of explicit comparisons of predicted and measured values relative to thresholds, the comparison and thresholding analysis of the HM scheme can be performed implicitly, for example using a neural network or similarly trained model which accepts the TGT and flow number measurements and predictions as inputs to the neural network and provides fault indices as outputs. Indeed, this can be taken a step further by representing the engine model as a surrogate model, in the form of a neural network (e.g. using the approach of S. King et al. (ibid.)), such that the inputs to the network are: the measured engine operating parameters used to predict TGT and flow number, the measured TGT, and any other measurements needed to derive the measured flow number (i.e. the readings from the pressure sensors 50, 51).

Although the fuel delivery flow number part of the scheme typically requires knowledge of the normal behaviour at a given operating condition of fuel delivery pressure ($P_{fuel}$), this can be readily determined during a training phase of the engine model.

Although the HM unit may determine the fault state on wing, another option is for the unit merely to collect the necessary measurements, which are then processed to determine the fault state using a ground-based system.

Advantageously, the HM scheme provides a useful cross-check against a measured temperature distribution in the turbine, and thus enables a more deterministic identification that a given fault is e.g. under or over-scheduling of fuel. This is because it can distinguish between an overboard fuel leakage or other fault, which could cause the pressure in the recirculation line to drop.

The scheme is also compatible with long term trending, which is helpful for monitoring failure modes such as coking related failure mechanisms, which tend to develop over time.

Another advantage is that the scheme can be used to identify a fault in the pilot fuel delivery flow as either (or both) pilot and mains fuel delivery pressures (hence flow numbers) can be monitored, depending on the level of instrumentation.

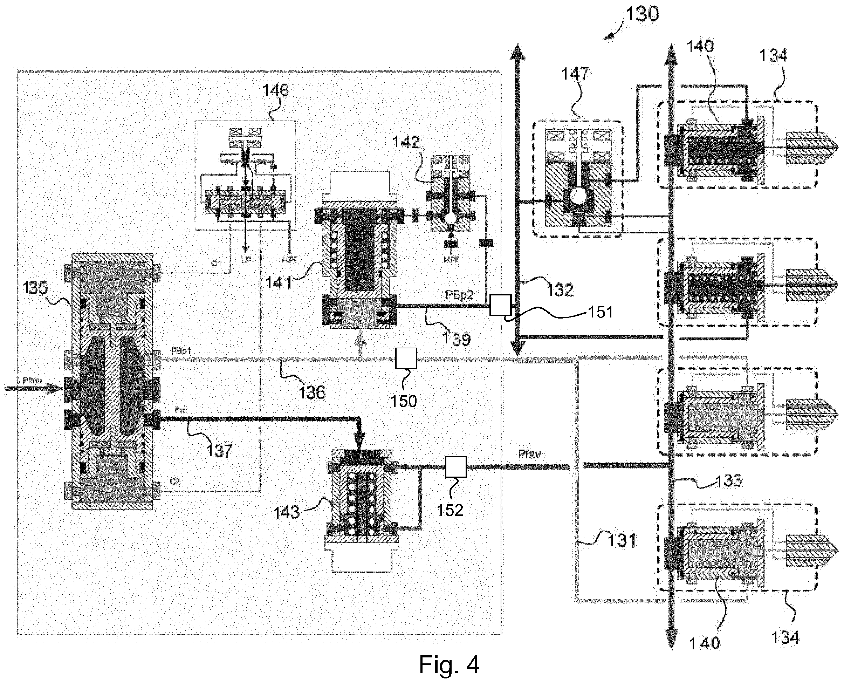

More generally, the HM scheme is independent of fuel system architecture. Thus, for example, Figure 4 shows a staging system 130 of another lean burn fuel supply system. As explained below, the fuel supply system avoids a re-circulation line and has only a mains FSV 140 for each injector 134. Moreover, the pilot discharge orifices of the injectors are divided into two groups by first 131 and second 132 pilot manifolds in order to provide lean blow out protection. However, the system still benefits from an HM scheme similar to that described above.

The staging system 130 accepts fuel from the HP pumping stage for feeds to the combustor 15 of the engine 10. The staging system splits the fuel under the control of the EEC into two flows: one at a pressure $PB_{p1}$ for the first 131 and second 132 pilot manifolds and the other at a pressure $P_{fsv}$ for a mains manifold 133. FSVs 140 at the injectors prevent combustion chamber gases entering the respective manifolds and also provide a drip tight seal between the mains manifold and the injectors when mains is de-staged.

The staging system 130 has an FFSV 135, which receives a metered fuel flow from the HMU at pressure $P_{fmu}$. The position of a spool slidable within the FFSV under the control of a servo-valve 146 determines the outgoing flow split between a pilot connection pipe 136 which delivers fuel to the first 131 and second 132 pilot manifolds and a mains connection pipe 137 which delivers fuel to the mains manifold 133. A mains fuel flow sensing valve (MFFSV) 143 can be provided on the mains connection pipe 137, with the FFSV then providing a coarse split and the MFFSV trimming to the required accuracy.

The second pilot manifold 132 connects to the pilot connection pipe 136 via a further connection pipe 139 (at a pressure $PB_{p2}$) and a lean blow out protection valve 141. This is operable to terminate or substantially reduce the supply of fuel to the second pilot manifold and associated pilot discharge orifices, when desired, so as to increase the flow of fuel to the first pilot manifold and associated discharge orifices under low fuel conditions for a given metered flow from the HMU. The valve 141 can be controlled by way of a solenoid operated control valve 142. Further details of such lean blow out protection are described in EP A 2469057.

The mains FSVs 140 distribute the mains flow from the mains manifold 133 to the mains discharge orifices in the injectors 134, while the pilot flow is continuously passed through the mains FSVs for valve cooling purposes. These FSVs each have a chamber containing a movable, spring-biased piston, with the chamber to a pilot (spring) side of the piston being in fluid communication with the respective pilot fuel manifold 131, 132 and the chamber to a mains (non-spring) side of the piston being in fluid communication with the mains fuel manifold 133. In this way, the FSVs 140 have a reduced cracking pressure with the pilot (spring) side of the FSVs being referenced to pilot manifold pressure ($PB_{p1}$ or $PB_{p2}$) rather than the lower mains pressure downstream of the FSVs. With the low cracking pressure, the pressures on either side of each piston ($P_{fsv}$ and $PB_p$) are approximately equal during the pilot-only operating mode such that the FSV springs maintain the FSVs 140 in a closed position (i.e. no flow from the mains manifold 133 through the FSVs to the mains discharge orifices of the injectors 134). The approximate equalisation of the pressures $P_{fsv}$ and $P_{bp}$ is achieved by energising open a single-stage solenoid-operated mains cooling valve 147 which allows a small cooling flow through the mains manifold 133 to pass to the second pilot manifold 132 through a port in the solenoid valve 147 that is significantly larger than the port in the FFSV 135 feeding the mains connection pipe 137.

In this pilot-only operating mode there is a large flow number opening between the HMU supply and the pilot connection pipe 136, such that $P_{fmu} \approx PB_{p1} \approx P_{fsv}$. Any difference between the metered fuel pressure ($P_{fmu}$) from the HMU supply and the pilot manifold pressures ($PB_{p1}$ and $PB_{p2}$) is insufficient to open the FSVs 140. In the pilot-only mode there is a small opening in the FFSV between the HMU supply and the mains connection pipe 137 to allow for the cooling flow in the mains manifold 133. The mains manifold remains fully primed in pilot-only mode to reduce the unprimed volume required to be filled when mains flow to the combustor is required. When mains staging is selected solenoid-operated mains cooling valve 147 is closed so that the connection between the mains manifold 133 and the second pilot manifold 132 is closed. Simultaneously, the FFSV 135 moves to increase the opening between the HMU supply and the mains connection pipe 137. This reduces $PB_{p1}$ and $PB_{p2}$ relative to $P_{fsv}$, resulting in fuel flow to the mains discharge orifices of the injectors 134.

When the pilot-and-mains operating mode is selected, the solenoid operated mains cooling valve 147 is closed, and the spool position of the FFSV 135 is altered to increase the opening of the mains port of the FFSV and reduce the opening of the pilot port of the FFSV, which increases the pressure differential $P_{fmu}$-$PB_{p1}$ across the pilot port, thus producing a rise in pressure $P_{fsv}$ relative to $PB_{p1}$ and $PB_{p2}$. This results in the pistons of the FSVs 140 opening against their respective spring forces, and fuel flowing through the FSVs to the mains discharge orifices of the injectors 134.

The HM scheme monitors the pressure in the first 131 and second 132 pilot manifolds and the mains manifold 133 via respective pilot 150, 151 and mains 152 pressure sensors on those manifolds or the pilot 136, 139 and mains 137 connection pipes to the manifolds. Thus in this case, the scheme monitors for variations in three manifold flow numbers.

Embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

As disclosed herein, the term "computer readable medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "computer-readable medium" includes, but is not limited to portable or fixed storage devices, optical storage devices, wireless channels and various other mediums capable of storing, containing or carrying instruction(s) and/or data.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine readable medium such as storage medium. A processor(s) may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

## Claims

1. A method of determining a fuel delivery fault in a gas turbine engine (10) having a combustor (15), a combustor fuel system for delivering fuel to the combustor, and a turbine which is driven by hot gas from the combustor, the method including:

    comparing a measured turbine gas temperature profile against a predicted turbine gas temperature profile;
    comparing a measured fuel delivery flow number of the combustor fuel system, defined by the mass flow rate of fuel for a given pressure drop from the fuel supply to the combustor, against a predicted fuel delivery flow number of the combustor fuel system; and
    indicating that a fuel delivery fault in the combustor fuel system has been detected when both the measured turbine gas temperature profile and the measured fuel delivery flow number differ from their predicted values by more than respective predetermined thresholds, wherein the measured fuel delivery flow number is based on measurements of: fuel mass flow rate at a given measurement location in the fuel system, fuel pressure at the given measurement location, and combustor inlet pressure, and wherein the predicted turbine gas temperature profile and the predicted fuel delivery flow number are obtained from an engine model or models.

2. A method according to claim 1, wherein the indication that a fuel delivery fault has been detected includes identifying the probable location of the fuel delivery fault.

3. A method according to claim 1 or 2, wherein the combustor fuel system has a manifold (31, 32, 131, 132, 133) which delivers a fuel flow to fuel injectors (33, 134) of the combustor, and the comparison of flow numbers includes comparing a measured against a predicted fuel delivery flow number for fuel flow in the manifold.

4. A method according to claim 3, wherein the combustor fuel system further has respective fuel passages (52, 53) from the manifold to the fuel injectors, and the comparison of flow numbers includes comparing a measured against a predicted fuel delivery flow number for fuel flow in each fuel passage.

5. A method according to any one of the previous claims, wherein the measured turbine gas temperature profile is obtained from an array of temperature sensors in the turbine.

6. A method according to claim 5, wherein combustor fuel system delivers fuel to plural fuel injectors (33, 134) of the combustor, and there is at least one temperature sensor for every two of the fuel injectors.

7. A method according to any of the preceding claims, wherein the predictions of the engine model are based on measurements of engine performance parameters which include at least: the combustor inlet pressure, the combustor inlet temperature, the total fuel mass flow rate delivered to the combustor, and a shaft speed of the engine.

8. A method according to any one of the previous claims, further including:

    measuring the turbine gas temperature profile and the fuel delivery flow number; and
    predicting the turbine gas temperature profile and the fuel delivery flow number.

9. A computer program comprising code which, when the code is executed on a data processing arrangement according to claim 11, causes the computer to perform the method of any one of claims 1 to 8.

10. A computer readable medium storing a computer program comprising code which, when the code is executed on a data processing arrangement according to claim 11, causes the computer to perform the method of any one of claims 1 to 8.

11. A data processing arrangement comprising one or more processors adapted to perform the method of any one of claims 1 to 8.

**12.** A health monitoring system comprising:

the data processing arrangement of claim 11;
an array of temperature sensors for obtaining the measured turbine gas temperature profile; and
one or more combustor fuel system fuel pressure sensors for use in obtaining the measured fuel delivery flow number.

**13.** A gas turbine engine having the health monitoring system of claim 12.

**Patentansprüche**

**1.** Verfahren zum Bestimmen eines Kraftstoffzufuhrfehlers in einem Gasturbinentriebwerk (10), das eine Brennkammer (15), ein Brennkammerkraftstoffsystem zum Zuführen von Kraftstoff zur Brennkammer und eine Turbine, die durch heißes Gas aus der Brennkammer angetrieben wird, aufweist, wobei das Verfahren umfasst:

Vergleichen eines gemessenen Turbinengastemperaturprofils mit einem vorhergesagten Turbinengastemperaturprofil;
Vergleichen einer gemessenen Kraftstoffzufuhrströmungszahl des Brennkammerkraftstoffsystems, definiert durch den Kraftstoffmassenstrom für einen gegebenen Druckabfall von der Kraftstoffzufuhr zur Brennkammer, mit einer vorhergesagten Kraftstoffzufuhrströmungszahl des Brennkammerkraftstoffsystems;
und Anzeigen, dass ein Kraftstoffzufuhrfehler in dem Brennkammerkraftstoffsystem festgestellt wurde, wenn sowohl das gemessene Turbinengastemperaturprofil als auch die gemessene Kraftstoffzufuhrströmungszahl von ihren vorhergesagten Werten um mehr als jeweilige vorbestimmte Schwellenwerte abweichen, wobei die gemessene Kraftstoffzufuhrströmungszahl auf Messungen von Folgendem basiert: Kraftstoffmassenstrom an einer bestimmten Messstelle im Kraftstoffsystem, Kraftstoffdruck an der angegebenen Messstelle und Brennkammereinlassdruck, und wobei das vorhergesagte Turbinengastemperaturprofil und die vorhergesagte Kraftstoffzufuhrströmungszahl aus einem oder mehreren Triebwerksmodellen erhalten werden.

**2.** Verfahren nach Anspruch 1, wobei die Anzeige, dass ein Kraftstoffzufuhrfehler festegestellt wurde, das Identifizieren der wahrscheinlichen Stelle des Kraftstoffzufuhrfehlers umfasst.

**3.** Verfahren nach Anspruch 1 oder 2, wobei das Brennkammerkraftstoffsystem einen Verteiler (31, 32, 131, 132, 133) aufweist, der einen Kraftstoffstrom an Kraftstoffinjektoren (33, 134) der Brennkammer zuführt, und der Strömungszahlenvergleich das Vergleichen einer gemessenen mit einer vorhergesagten Kraftstoffzufuhrströmungszahl für den Kraftstoffstrom im Verteiler umfasst.

**4.** Verfahren nach Anspruch 3, wobei das Brennkammerkraftstoffsystem ferner jeweilige Kraftstoffkanäle (52, 53) vom Verteiler zu den Kraftstoffinjektoren aufweist und der Strömungszahlenvergleich das Vergleichen einer gemessenen mit einer vorhergesagten Kraftstoffzufuhrströmungszahl für den Kraftstoffstrom in jedem Kraftstoffkanal umfasst.

**5.** Verfahren nach einem der vorhergehenden Ansprüche, wobei das gemessene Turbinengastemperaturprofil von einer Anordnung von Temperatursensoren in der Turbine erhalten wird.

**6.** Verfahren nach Anspruch 5, wobei das Brennkammerkraftstoffsystem mehreren Kraftstoffinjektoren (33, 134) der Brennkammer Kraftstoff zuführt und es mindestens einen Temperatursensor für je zwei der Kraftstoffinjektoren gibt.

**7.** Verfahren nach einem der vorhergehenden Ansprüche, wobei die Vorhersagen des Triebwerksmodells auf Messungen von Triebwerksleistungsparametern basieren, die mindestens Folgendes umfassen: den Brennkammereinlassdruck, die Brennkammereintrittstemperatur, den Gesamtkraftstoffmassenstrom, der der Brennkammer zugeführt wird, und eine Wellendrehzahl des Triebwerks.

**8.** Verfahren nach einem der vorhergehenden Ansprüche, ferner umfassend:

Messen des Turbinengastemperaturprofils und der Kraftstoffzufuhrströmungszahl;
und Vorhersagen des Turbinengastemperaturprofils und der Kraftstoffzufuhrströmungszahl.

**9.** Computerprogramm, umfassend Code, der, wenn der Code auf einer Datenverarbeitungsanordnung gemäß Anspruch 1 ausgeführt wird, den Computer veranlasst, das Verfahren nach einem der Ansprüche 1 bis 8 durchzuführen.

**10.** Computerlesbares Medium, das ein Computerprogramm speichert, das Code umfasst, der, wenn der Code auf einer Datenverarbeitungsanordnung gemäß Anspruch 1 ausgeführt wird, den Computer veranlasst, das Verfahren nach einem der Ansprüche 1 bis 8 durchzuführen.

**11.** Datenverarbeitungsanordnung, umfassend einen oder mehrere Prozessoren, die dazu eingerichtet sind, das Verfahren nach einem der Ansprüche 1 bis 8 durchzuführen.

**12.** Zustandsüberwachungssystem, umfassend:

die Datenverarbeitungsanordnung nach Anspruch 11;
eine Anordnung von Temperatursensoren zum Erhalten des gemessenen Turbinengastemperaturprofils; und
einen oder mehrere Kraftstoffdrucksensoren des Brennkammerkraftstoffsystems zur Verwendung beim Erhalten der gemessenen Kraftstoffzufuhrströmungszahl.

**13.** Gasturbinentriebwerk, aufweisend das Zustandsüberwachungssystem nach Anspruch 12.

**Revendications**

**1.** Procédé de détermination d'une anomalie d'alimentation de carburant dans un moteur à turbine à gaz (10) ayant une chambre de combustion (15), un système de carburant de chambre de combustion destiné à alimenter en carburant la chambre de combustion, et une turbine qui est entraînée par un gaz chaud en provenance de la chambre de combustion, le procédé incluant :

la comparaison d'un profil de température de gaz de turbine mesuré par rapport à un profil de température de gaz de turbine prédit ;
la comparaison d'un nombre de débit d'alimentation de carburant mesuré du système de carburant de chambre de combustion, défini par le débit d'écoulement massique de carburant pour une chute de pression donnée depuis l'alimentation en carburant à la chambre de combustion, par rapport à un nombre de débit d'alimentation en carburant prédit du système de carburant de chambre de combustion ;
et l'indication qu'une anomalie d'alimentation de carburant dans le système de carburant de chambre de combustion a été détectée quand le profil de température de gaz de turbine mesuré et le nombre de débit d'alimentation de carburant mesuré diffèrent tous deux de leurs valeurs prédites de plus que des seuils prédéterminés respectifs, dans lequel le nombre de débit d'alimentation de carburant mesuré est basé sur des mesures de :
débit d'écoulement massique du carburant à un emplacement de mesure donné dans le système de carburant, pression du carburant à l'emplacement de mesure donné, et pression d'admission de la chambre de combustion, et dans lequel le profil de température de gaz de turbine prédit et le nombre de débit d'alimentation de carburant prédit sont obtenus à partir d'un ou plusieurs modèles de moteur.

**2.** Procédé selon la revendication 1, dans lequel l'indication qu'une anomalie d'alimentation de carburant a été détectée inclut l'identification de l'emplacement probable de l'anomalie d'alimentation de carburant.

**3.** Procédé selon la revendication 1 ou 2, dans lequel le système d'alimentation de chambre de combustion a un collecteur (31, 32, 131, 132, 133) qui délivre un débit de carburant à des injecteurs de carburant (33, 134) de la chambre de combustion, et la comparaison des nombres de débit inclut la comparaison d'un nombre de débit d'alimentation de carburant mesuré par rapport à un prédit pour un débit de carburant dans le collecteur.

**4.** Procédé selon la revendication 3, dans lequel le système d'alimentation de chambre de combustion a des passages de carburant respectifs (52, 53) depuis le collecteur aux injecteurs de carburant, et la comparaison des nombres de débit inclut la comparaison d'un nombre de débit d'alimentation de carburant mesuré par rapport à un prédit pour un débit de carburant dans chaque passage de carburant.

**5.** Procédé selon l'une quelconque des revendications précédentes, dans lequel le profil de température de gaz de turbine mesuré est obtenu à partir d'un réseau de capteurs de température dans la turbine.

**6.** Procédé selon la revendication 5, dans lequel le système de carburant de chambre de combustion délivre du carburant à une pluralité d'injecteurs de carburant (33, 134) de la chambre de combustion, et il existe au moins un capteur de température pour un injecteur de carburant sur deux.

**7.** Procédé selon l'une quelconque des revendications précédentes, dans lequel les prédictions du modèle de moteur sont basées sur des mesures de paramètres de performance du moteur qui incluent au moins :
la pression d'admission de la chambre de combustion, la température d'admission de la chambre de combustion, le débit d'écoulement massique de carburant total délivré à la chambre de combustion, et une vitesse d'arbre du moteur.

**8.** Procédé selon l'une quelconque des revendications précédentes, incluant en outre :

la mesure du profil de température de gaz de turbine et le nombre de débit d'alimentation de carburant ;

et la prédiction du profil de température de gaz de turbine et du nombre de débit d'alimentation de carburant.

9. Programme informatique comprenant un code qui, quand le code est exécuté sur un agencement de traitement de données selon la revendication 1, amène l'ordinateur à exécuter le procédé selon l'une quelconque des revendications 1 à 8.

10. Support lisible par ordinateur sur lequel est stocké un programme informatique comprenant un code qui, quand le code est exécuté sur un agencement de traitement de données selon la revendication 1, amène l'ordinateur à exécuter le procédé selon l'une quelconque des revendications 1 à 8.

11. Agencement de traitement de données comprenant un ou plusieurs processeurs adaptés pour exécuter le procédé selon l'une quelconque des revendications 1 à 8.

12. Système de surveillance de santé comprenant :

    l'agencement de traitement de données selon la revendication 11 ;
    un réseau de capteurs de température destinés à obtenir le profil de température de gaz de turbine mesuré ; et
    un ou plusieurs capteurs de pression de carburant de système de carburant de chambre de combustion à utiliser dans l'obtention du nombre de débit d'alimentation de carburant mesuré.

13. Moteur à turbine à gaz possédant le système de surveillance de santé selon la revendication 12.

Fig. 1

Fig. 2

EP 3 434 884 B1

Measurements:
1.    Engine operating condition:
        • T30, Combustor Inlet Temperature
        • P30, Combustor Inlet Pressure
        • WFE, Total Engine Fuel Flow
        • Fuel split (required for a lean burn
          system application)
        • NH, High pressure shaft speed
2.    Manifold pressure
3.    Manifold fuel mass flow rate
4.    TGT$_{i-n}$, Individual Turbine Gas Temperature
      measurements

Predict turbine gas
temperature profile

Measure turbine gas
temperature profile

Measured Temperature
= Prediction?            Y

N

Predict manifold
flow number

Measure manifold
flow number

Measured FN
= Prediction?         Y    Health index =
                           Additional fault diagnostics

N

Measured Flow
Number < Predicted      N    Health index =
Flow Number?                 Fault: High FN

Y

Health index =
Fault: Low FN

Fig. 3

15

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2469057 A
- US 20160245524 A
- US 2009046762 A
- US 9297707 B
- US 2004079070 A
- EP 2339147 A

### Non-patent literature cited in the description

- **S. KING et al.** Anomaly Detection of Combustor Systems in Support of Unmanned Air Vehicle Applications. *6th International Conference on Condition Monitoring and Machinery Failure Prevention Technologies,* 2009, vol. 2, 694-705